# EUROPEAN PATENT APPLICATION

(11) **EP 2 061 213 A1**
(43) Date of publication of application: **20.05.2009**
(21) Application number: 07121052.0
(22) Date of filing: 19.11.2007
(51) Int. Cl.: H04L 29/08

(54) **Method and system for application preference registration to a content delivery system**

(71) Applicant: Research In Motion Limited, Waterloo, Ontario N2L 3W8 (CA)
(72) Inventor: McColgan, Brian, Toronto Ontario M9A 2T6 (CA); Shenfield, Michael, Richmond Hill, Ontario L4C 3S9 (CA); Martin-Cocher, Gaelle, Toronto Ontario M6S 2Y2 (CA)
(74) Representative: Rickard, David John

(57) **Abstract**

A method and system for providing application preferences to a content delivery system, the method having the steps of: publishing, to a extensible markup language 'XML' document management 'XDM' repository preferences associated with relationships between the application and mobile services; and storing, on an XDM server, the preferences associated with relationships between the application and mobile services.

## Description

The present disclosure relates generally to extensible markup language (XML) document management (XDM), and in particular to storing preferences in XDM.

The open mobile architecture (OMA) dynamic content delivery (DCD) specification defines a generic delivery enabler to which an application can register to receive content. The DCD enabler may, in some embodiments, deliver arbitrary content that is opaque for the DCD enabler. Content is grouped into channels which are described by channel metadata. In addition, an application that wants to receive content through the DCD enabler may provide its preferences utilizing a set of application metadata. In order to provide this metadata, registration of the application resident on a device is necessary with a DCD client.

The OMA XDM specification defines a platform for the storage of information on behalf of one or more users and/or applications. Information is stored in an extensible and platform neutral manner. One example is to store information in XML documents. This allows for authorized principals to manage and/or share this data as required.

XDM is optimized for mobile environments, where device characteristics and network bandwidth may be constrained. The mandate of the XDM enabler is to support other OMA enablers as outlined in chapter 4 of OMA-RD-XDM-V1_0-20060612-A.

### GENERAL

A generic delivery mechanism such as that defined by DCD is required to know the preferences defined for an application in order to best deliver content to the application. For example generic application preferences may include where content will be stored, content theme, a MIME type, content type, delivery frequency or schedule, content size limitations, among others.

Content specific application preferences are not handled by a DCD enabler, but are rather treated as opaque content and passed through to the content provider for handling. Content specific application preferences include subscription filters for a specific subset of the content, among others such as subscription filter can include for example a subset of stocks from a stock quotation service, allowing a user to receive only stock quotations for stocks the user is interested in.

The present disclosure preferably deals with generic application preferences and in particular with an indirect method of providing the preferences to the DCD enabler by using an XDM enabler thereby bypassing direct registration of an application with a DCD client.

The present disclosure may provide for a user preference model to provide application preferences to a generic delivery application for an OMA DCD enabler. In particular, the methods and systems consist of, in one embodiment, establishing OMA DCD application usage for XDM consistent with other OMA application usage identifiers.

In a further embodiment, the present method and system may provide for the defining of an XML document schema for the storage of all application related preferences. In one example, preferably included in this schema are DCD application preferences that are of interest to the DCD enabler components.

The present method and system may provide for mechanisms for the storage and retrieval of both application preferences of DCD interest, content specific application preferences and DCD preferences, herein called DCD-prefs, using an XDM server.

The storage or update of DCD preferences to an XDM server from the installed application within a given users device execution environment may utilize different apologies and include an application submitting DCD-prefs to a DCD client and the DCD client transferring those to a DCD server. The DCD server may be enhanced to provide XDM client functionality in order to persist the DCD-prefs to the XDM server. A further embodiment may comprise an application submitting DCD preferences to a DCD client. In this embodiment, the DCD client may be enhanced to provide XDM client functionality in order to persist the DCD-prefs into the XDM server. In a further embodiment an application providing DCD-prefs to a dedicated XDM client process, co-located on the device and having a connection to the XDM server. In a further embodiment, an application with XDM client functionality embedded therein may be provided where the application has a connection to the XDM server with which to publish the DCD-prefs.

In a further embodiment, the retrieval or notification of update from the XDM server of DCD-prefs for a given application to the DCD enabler components is described. Different scenarios may exist for retrieving DCD-prefs either directly or indirectly from the XDM server. These include, the DCD server being enhanced to provide XDM client functionality in order to fetch or be notified of updates to the DCD-prefs from the XDM server in this embodiment, the DCD client receives an update from the DCD server.

In a further embodiment, the DCD client may be enhanced to provide XDM client functionality in order to fetch or be notified of updates to the DCD-prefs from the XDM server. The DCD client notifies the DCD server upon updates.

The present disclosure may further provide for the insertion of a DCD client that is configured as an HTTP proxy in the path between the XDM client and XDM server.

As will be appreciate by those skilled in the art, this may allow the DCD to reuse XDM frameworks that may be already be available both on the device and on the server and provides more flexibility in terms of deployment scenarios for the implementation of DCD.

The present disclosure may therefore provide a method for providing application preferences to mobile services comprising: publishing, to a extensible markup language 'XML' document management 'XDM' repository preferences associated with relationships between the application and mobile services; and storing, on an XDM server, the preferences associated with relationships between the application and mobile services.

The present disclosure may further provide a system for application preference registration to a content delivery system comprising: an XDM repository on an XDM server adapted to store preferences associated with relationships between mobile services; and an XDM client adapted to publish preferences associated with relationships between mobile services, including a content delivery system.

### BRIEF DESCRIPTION OF THE DRAWINGS

The present method and system will be better understood with reference to the drawings in which:
**Figure 1** is a block diagram illustrating a dynamic content delivery architecture;
**Figure 2** is a block diagram illustrating a general XDM architectural model;
**Figure 3** shows an XDM repository structure;
**Figure 4** shows an XDM repository structure in which a dynamic content delivery branch has been added, the dynamic content delivery branch referring to a presence branch with DCD Service tuple;
**Figure 5** is an XDM repository structure in which dynamic content delivery services have been added under a presence branch with DCD Service tuple;
**Figure 6** is an XDM repository structure in which various services have cross-service dependencies;
**Figure 7** is a block diagram illustrating a first architectural model in which application preferences are propagated through an XDM client, XDM server, DCD server to a DCD client;
**Figure 8** is a block diagram of an architectural model in which traffic from an XDM client is rerouted via a DCD client as an HTTP proxy;
**Figure 9** is a block diagram illustrating an architectural model in which a DCD client is XDM client aware;
**Figure 10** is a block diagram of an architectural model in which a DCD server is XDM client aware;
**Figure 11** is an architectural model in which an application is XDM client aware; and
**Figure 12** is a block diagram of an exemplary mobile device apt to be used with present disclosure.

### DESCRIPTION OF PREFERRED EMBODIMENTS

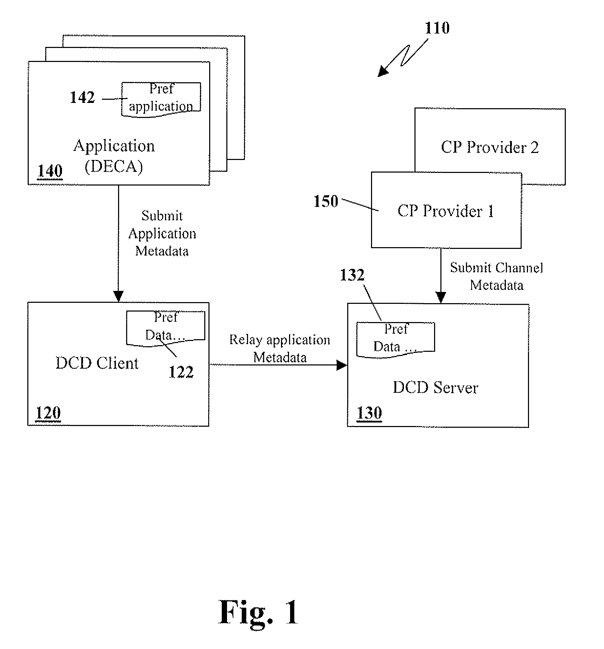

Reference is now made to **Figure 1. Figure 1** illustrates a generic DCD architecture **110** having a DCD client **120** and a DCD server **130.**

One or multiple device resident applications **140** are able to receive content through a DCD client **120.** Each application **140** is referred to as a DCD enabled client application (DECA). A DECA provides, to the DCD client **120,** preferences related to the content selection and delivery personalization and configuration. The personalization is user specific and the configuration is device/application specific. This data is used by the DCD client **120** and the DCD server **130,** which receive the relevant subset of application preferences as part of an application registration message relayed by the DCD client **120.**

A plurality of content providers **150** are associated with or registered with DCD server **130** and provide the dynamic content requested by an application **140.**

The preferences are used by a DCD enabler to match application preferences to channel metadata provided by content providers **150** on channel registration and to offer appropriate content to the application **140.** As used herein, a DCD enabler comprises the DCD server **130** and DCD client **120.** The preferences are also used to set up delivery channel attributes such as delivery schedule or preferences, content storage, content expiry, selection of pull or push services, among others. Upon content selection and channel establishment, the DCD enabler delivers the content from the content provider **140** to the application.

The preferences can be stored by application **140** as application preferences **142.** Further, the preferences can be stored or cached by DCD client as preference data **122** and by DCD server **130** as preference data **132.**

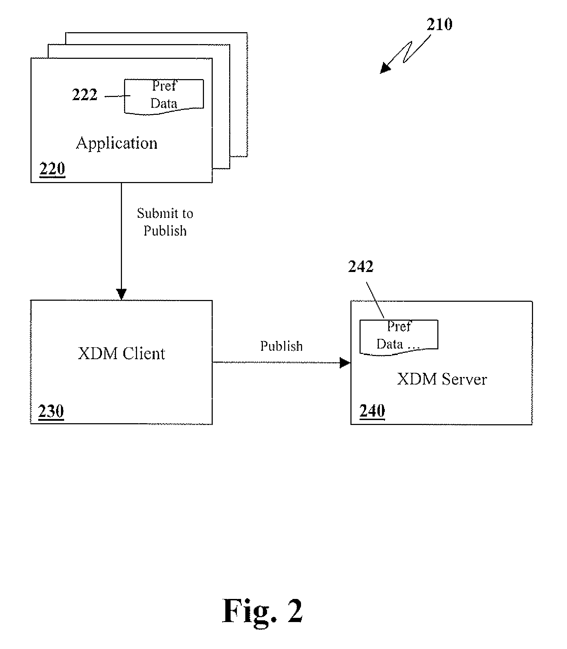

Reference is now made to **Figure 2. Figure 2** illustrates a current XDM model **210** for storing application data. In **Figure 2****,** an application **220** is adapted to provide preference data **222** to an XDM client **230,** where XDM client published the preference data **222** to XDM server **240.** XDM server **240** stores the data as preference data **242.**

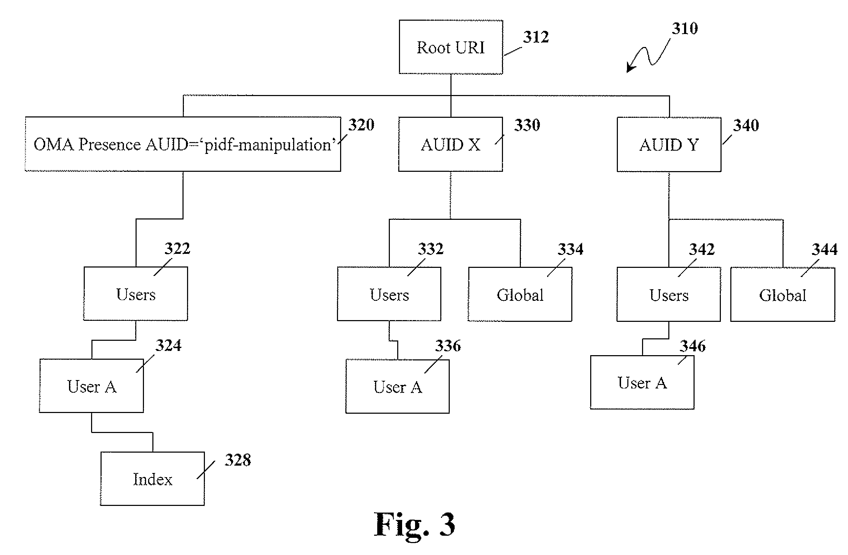

Reference is now made to **Figure 3. Figure 3** illustrates a general XDM architectural model **310** that allows storage of any arbitrary data stored in an XDM repository and within the XDM hierarchy, under an Application Unique Identifier (AUID) as a branch defining a particular class of service. This is termed application usage.

Specifically, under the root uniform resource identifier (URI) **312** various branches exist. The branches shown in the example of **Figure** include a "presence" branch **320,** an AUID X branch **330** and an AUID Y branch **340.**

Under presence branch **320,** a category **322** exists for users. Various users can be stored under this category and in the example of **Figure** only a first user **324,** shown as User A, is provided. As will be appreciated by those skilled in the art, multiple users would likely be stored under User category **322.** However, in illustration purposes, only one user is shown.

A first user **324** includes an index **326** to store particular information about User A.

Under the AUID X **330** branch, categories **332** for users and **334** for global are provided. As will be appreciated, global category **334** stores information that is applicable to all users for branch AUID X **330.**

In the example of **Figure 3****,** a single User A 336 is found within the users category **332.**

Similarly, under AUID Y **340** branch, a users category **342** and a global category **344** exist. Users **342** include a first user **346,** shown as User A.

Examples of applications stored with an application unique identifier such as those of AUID X branch **330** and AUID Y branch **340** could include push-to-talk, DCD, mobile advertisement, among others. The XDM structure allows an XDM client to store, retrieve, update or delete data to or from an XDM server noted by the root URI.

XDM also supports asynchronous notification of interested clients or observers to changes made to underlying documents/data that a given application or user may have privileges to read.

As will be appreciated, the XDM architecture is relatively uniform and has predefined branches. **Figure 3** shows the repository structure at an XDM server. Data related to a given application usage stored within a repository on the XDM server that is represented by the root URI. Another application or service that requires this information and has suitable authorization to obtain this data may subsequently retrieve information from the XDM server or be notified if any or all of the information is changed. The notification may further include specific information on what was changed.

As will be appreciated by those skilled in the art, the above can be adapted to allow for the storing of preferences associated with relationships of a particular mobile service and other services. This aspect will be illustrated below with reference to a dynamic content delivery architecture. However, the present disclosure is not meant to be limited to DCD and any preferences associated with the relationships of a particular mobile service or services can be utilized.

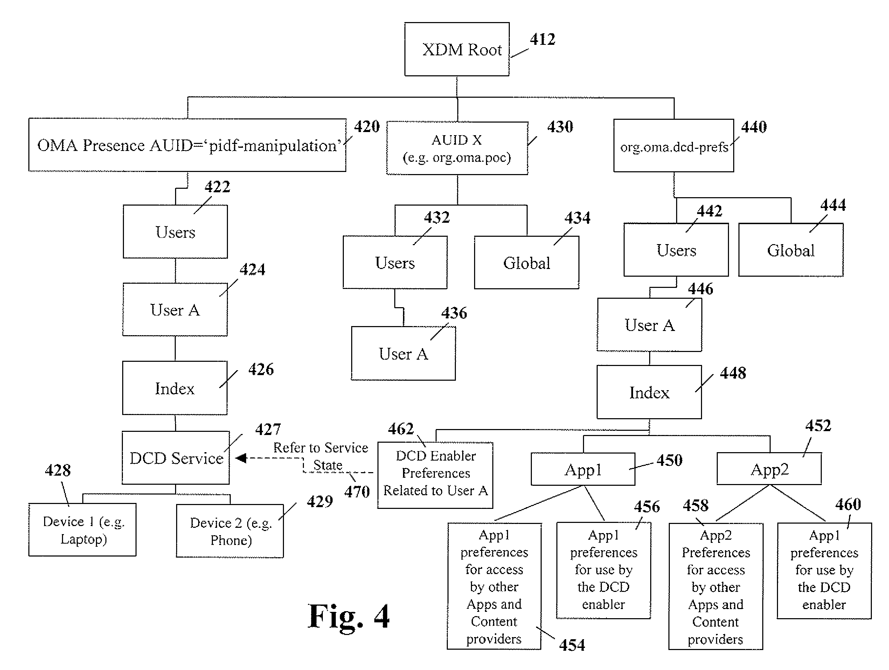

Reference is now made to **Figure 4. Figure 4** shows an example in which a branch of the XDM has been utilized for the storage of DCD preferences.

In particular, **Figure 4** illustrates one embodiment with a separate AUID or class of service for DCD, along with the existing AUID for presence information. In the example of **Figure 4****,** each application within the user area of DCD preferences has zero or more application elements corresponding to DCD enabled applications. For each unique application defined for a given user, there exists elements containing the associated application preferences, along with application preferences specifically for use by the DCD enabler components. In addition, a document resource may also exist which provides linkage or reference to the corresponding users DCD service aspects within the presence information store. This includes indirect access to relative device information related to that service. This linkage reduces the amount of redundant information required to be included in DCD preferences related specifically to the DCD service itself.

In **Figure 4****,** the XDM server is referenced by an XDM root **412.** The example of **Figure 4** includes three branches, namely a presence branch **420,** a push-to-talk branch **430** and a DCD preferences branch **440.**

Under the presence branch **420,** users are defined by category **422** and a first user **424,** shown as User A, is included. Other users would similarly fall under users category **422.**

First user **424** includes an index **426,** which further includes a DCD service tuple **427.**

Devices for DCD service **427** are branched under DCD service **427** and in the example of **Figure 4** include XML sub-elements within the DCD Service tuple, such as a laptop **428** and a phone **429.** As will be appreciated by those skilled in the art, the branch structure of branch **420** is merely meant as an example and is not limiting.

Under the push-to-talk branch **430,** a users category **432** and a global category **434** are provided. A single user **436** is shown for illustration purposes under users **432.**

DCD branch **440,** following XDM convention, includes a user or global area to which XML documents may be stored, searched, updated, among others. These are referred to herein as a users category **442** and a global category **444.** The embodiment of **Figure 4** may choose to store data related to DCD preferences in either category. However, for the example of **Figure 4****,** and in order to differentiate by each unique user or address of record, DCD preferences are stored in the user category.

A single user **446** is shown for illustration purposes under users **442.**

User **446** includes an index **448** that includes various branches under it. Specifically, under index **448** various applications can be listed. The example of **Figure 4** includes a first application **450** and a second application **452.** Application **450** further includes information listed as preferences for access by other application and content providers, shown in box **454** and application preferences for use by the DCD enabler, shown in box **456.** Similar information is shown for application **452** using boxes **458** and **460.**

Under index **448** a DCD enabler preferences for the user **446** is provided. Such preferences are global to all applications and are shown in box **462.** Examples of preferences could include schedule for delivery, utilizing pull services instead of push services or vice versa, among others, as they relate to User A.

A relationship between branches is provided in the example of **Figure 4** in order to allow the reduction of redundancy in the various branches. Specifically, the relationship shown by line **470** between box **462** and the DCD service **427** allows box **462** to have access to the user's preferences for the DCD service without having to store the preferences in a separate branch or under box **462.**

The format of XML documents corresponding to a user is up to the specific AUID and its requirements. The examples shown in **Figure 4** are not meant to be limiting.

Based on the above, a DCD specification application usage must be declared to permit the storage/retrieval of application preferences. Following the conventions detailed in IETF (rfc 4825), and adopted by OMA, the AUID chosen is vender/OMA specific. The standard approach is to use the reversed domain name for a prefix to the AUID. One example for the open mobile alliance would be "org.openmobilealliance.". A specific AUID is then added to this. For example, in **Figure 4****,** the "dcd-prefs" is added.

The schema for branch **440** might look like:

```
    <?xml version="1.0"?>
    <xsd:schema
      targetNamespace="urn:oma:xml:dcd:dcd-prefs"
      xmlns="urn:oma:xml:dcd:dcd-prefs"
      xmlns:xsd="http://www.w3.org/2001/XMLSchema"
      elementFormDefault="qualified"
      attributeFormDefault="unqualified">
 
      <xsd:complexType name="anchorType">
       <xsd:attribute name="anc" type="xsd:anyURI" use="required"/>
         <xsd:anyAttribute processContents="lax"/>
      </xsd:complexType>
 
      <xsd:complexType name="svcRefType">
         <xsd:sequence>
             <xsd:element name="serviceRef" type="anchorType" minOccurs="0"
    maxOccurs="unbounded"/>
             <xsd:any namespace="##other" processContents="lax" minOccurs="0"
    maxOccurs="unbounded"/>
         </xsd:sequence>
         <xsd:anyAttribute processContents="lax"/>
      </xsd:complexType>
 
      <xsd:complexType name="basePrefsType">
         <xsd:sequence>
          <xsd:any namespace="##other" processContents="lax" minOccurs="0"
    maxOccurs="unbounded"/>
         </xsd:sequence>
      </xsd:complexType>
 
      <xsd:complexType name="nonUniquePrefsType">
       <xsd:complexContent>
             <xsd:extension base="basePrefsType">
                 <xsd:attribute name="id" type="xsd:token" use="required"/>
             <xsd:anyAttribute processContents="lax"/>
             </xsd:extension>
         </xsd:complexContent>
      </xsd:complexType>
 
      <!-- Semantics: --><!-- app-prefs/app-prefs-for-dcd-enabler correlate on id's -->
<!-- dcd-prefs is optional/single element for DCD -->
<!-- attribute prefsType.id is considered unique -->
<xsd:complexType name="prefsType">
<xsd:sequence>
<xsd:element name="app-prefs" type="nonUniquePrefsType"
minOccurs="0" maxOccurs="unbounded"/>
<xsd:element name="app-prefs-for-dcd-enabler"
type="nonUniquePrefsType" minOccurs="0" maxOccurs="unbounded"/>
<xsd:element name="dcd-prefs" type="basePrefsType" minOccurs="0"
maxOccurs="1"/>
</xsd:sequence>
<xsd:attribute name="id" type="xsd:token" use="required"/>
<xsd:anyAttribute processContents="lax"/>
</xsd:complexType>
 
<xsd:element name="services" type="svcRefType"/>
 
<xsd:element name="preferences" type="prefsType"/>
 
</xsd:schema>
```

The following is an example of an instance of the above noted schema both for the service, and metadata relating to a user Bob with an Address of Record (AOR) of bob@example.com:

```
    <?xml version="1.0"?>
    <p1:services
      xmlns:p1="urn:oma:xml:dcd:dcd-prefs"
      xmlns:xsi="http://www.w3.org/2001/XMLSchema-instance">
 
      <!-- Sample service schema for user Bob -->
      <p1:serviceRef anc="http://xdms.com/pidf-
    manipulation/sip:bob@example.com/index/∼∼/tuple/service-description/service-
    id=%22org.openmobilealliance:DCD-Service%22"/>
 
    </p1:services>
```

As will be appreciated by those skilled in the art, the above shows the portion of the DCD Enabler Preferences **462** which defines a line **470** to the DCD Service tuple **427** of **Figure 4****.**

A further example show the DCD-pref XDM resource for the user Bob:

```
    <?xml version="1.0"?>
    <p1:preferences id="sip:bob@example.com"
      xmlns:p1="urn:oma:xml:dcd:dcd-prefs"
      xmlns:xsi="http://www.w3.org/2001/XMLSchema-instance">
 
      <!-- Bob's application specific preferences... -->
 
      <p1:app-prefs id="AdEngine">
       <appAdEngine key="pref1" value="value1"/>
       <appAdEngine key="pref2" value="value2"/>
      </p1:app-prefs>
 
      <p1:app-prefs id="PoC-Service" any_attribute="any_value">
       <pocService key="pref1" value="value2"/>
       <pocService key="pref2" value="value2"/>
       <any_element/>
      </p1:app-prefs>
 
      <!-- Bob's DCD/App preferences... -->
      <p1:app-prefs-for-dcd-enabler id="AdEngine" any_attribute="any_value">
       <adEngineDcdPref key="dcdKey1" value="value1"/>
       <adEngineDcdPref key="dcdKey2" value="value2"/>
       <any_element/>
      </p1:app-prefs-for-dcd-enabler>
 
      <!-- Bob has a couple of DCD specific preferences... -->
      <p1:dcd-prefs>
          <dcdPref key="dcdPref1" value="value1"/>
       <any_element/>
       <any_element/>
       <any_element/>
      </p1:dcd-prefs>
    </p1:preferences>
```

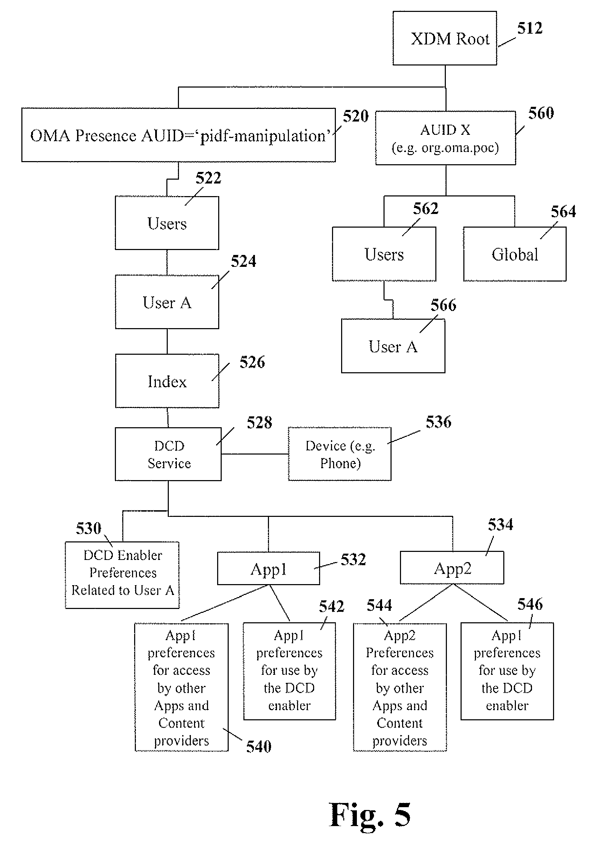

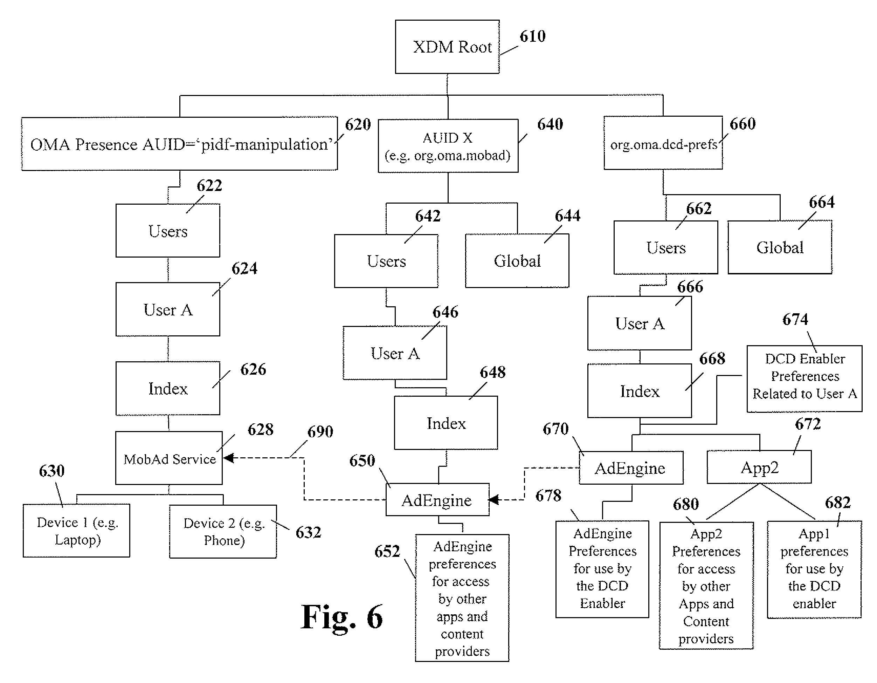

Similar code segments could be utilized for the examples of **Figure 5** and **6** below.

Reference is now made to **Figure 5. Figure 5** demonstrates another XDM based variation using the underlying presence information data model in order to provide this storage/retrieval of application preferences. Unlike the example of **Figure 4****,** the example of **Figure 5** uses direct access to DCD specific service parameters that have been added for inclusion in the presence information store. In addition, this model provides direct access to the underlying devices supporting DCD on behalf of the user.

Referring to **Figure 5****,** an XDM root **512** includes two branches. As will be appreciated by those skilled in the art, **Figure 5** is merely meant as an example and multiple branches under an XDM root can exist. A first branch **520** is the OMA presence branch and a second branch **560** is the AUID X branch. In the example in **Figure 5****,** the AUID X branch is a push-to-talk service.

The presence branch **520** includes a users category **522,** and a first user **524** exists under this category.

User index **526** falls under user **524** and a Service tuple **528** is defined under index **526.**

In the case of **Figure 5****,** this service is a DCD service and includes a DCD enabler preferences related to user **524** in box **530,** a first application **532,** a second application 534 and a description of associated devices box **536.**

First application **532** includes a first application preferences for access by other applications and content providers, shown in box **540** and an application preferences for use by a DCD enabler box **542.** Similarly, second application **534** includes a second application preferences for access by other applications in content providers box **544** and an application preferences for use by the DCD enabler box **546.**

The AUID X branch **560** includes a users category **562** and a global category **564,** which are similar to categories **432** and **434** described above with reference to **Figure 4****.**

For illustration purposes, a first user **566** is found below the users category **562.** As will be appreciated, multiple users could and would likely exist in the model **Figure 5****.** However, for illustration purposes, only a first user has been shown.

Reference is now made to **Figure 6****.** In essence, **Figure 6** illustrates a case where one enabler utilizes another enabler. In the example of **Figure 6****,** the first enabler is the mobile advertisement enabler and the second enabler is dynamic content delivery enabler. An ad engine, which is a component of the mobile advertisement is a client application for a DCD enabler, receives ads via the DCD enabler. **Figure 6** shows the example where the ad engine defined in the mobile advertisement branch of the XDM refers to a generic mobile advertisement server preferences described in the presence branch and in turn DCD related preferences of the ad engine in the DCD preferences branch of the XDM refer to the ad engine general preferences in the mobile advertisement branch of XDM.

In the example of **Figure 6****,** an XDM root **610** includes three branches.

A first branch **620** is the OMA presence branch. A second branch **640** is the mobile advertisement branch. A third branch **660** is a DCD preferences branch.

Under the first branch **620,** a users category **622** is defined and a first user **624** is shown under users category **622.**

First user **624** includes an index **626** that has mobile advertising services tuple 628 defined under it.

Mobile advertisement services can have preferences for a first device **630** and a second device **632** under it in the example of Figure 6. It should be noted that Figure 6 is merely an example and mobile advertisement services could have preferences for a multiplicity of devices depending on the devices that manifest the mobile advertisement corresponding to User A.

Under the second branch **640** for mobile advertisement, a users category **642** and global category **644** exist.

Under user category **642,** a first user **646** is defined that includes an index **648.**

An advertisement engine **650** falls under index **648** and advertisement engine **650** includes advertisement engine preferences for access by other applications and content providers box **652** under it.

The third branch **660** for DCD preferences includes a users category **662** and a global category **664.**

Under user category **662,** a first user **666** is included and has an index **668.**

In the example of **Figure 6****,** index **668** includes an advertisement engine **670,** a second application **672** and a DCD enabler preferences related to the first user box **674.**

Advertisement engine **670** is an example of a DCD application. As will be appreciated by those skilled in the art, in some embodiments a user of a mobile device may choose to allow advertisements to be associated with content that the user is consuming or creating in order to reduce the cost of operating of the mobile device. Such advertisements can, in certain cases, be associated with the content or associated with the user profile.

In example **Figure 6****,** advertisement engine **670** includes advertisement engine preferences for use by a DCD enabler in line **678.**

Further, application **672** includes application preferences for access by other applications and content providers box **680** and an application preferences for use by the DCD enabler box **682.**

In the example of **Figure 6****,** the ad agent **670** refers to the ad engine **650** under the mobile advertisement branch in order to obtain ad engine preferences. Further, ad engine 650 refers to mobile advertisement services **628** in line **690** to obtain specific mobile advertisement service preferences for specific devices.

The above therefore shows the extension of XDM to store application preferences. The above is, however, not meant to be limited to advertisement or DCD and is merely meant to show an association of application preferences with aspects of services that can insert application preferences.

Based on **Figures 4** to **6****,** the above deployment models may further be generalized to encompass any application or service and the technique could be applied to a variety of different services or classes of applications, and the associations could be oriented in such a way as to optimize existing information stored elsewhere within the XDM server. It should also be noted by those skilled in the art that all branches may refer to either local XDM server or a remote XDM server. A local XDM server is a hierarchy within the same location or referred to within the same root URI. A remote XDM server is a remote from the root URI, either in whole or in part. The reference is done through a remote root URI reference.

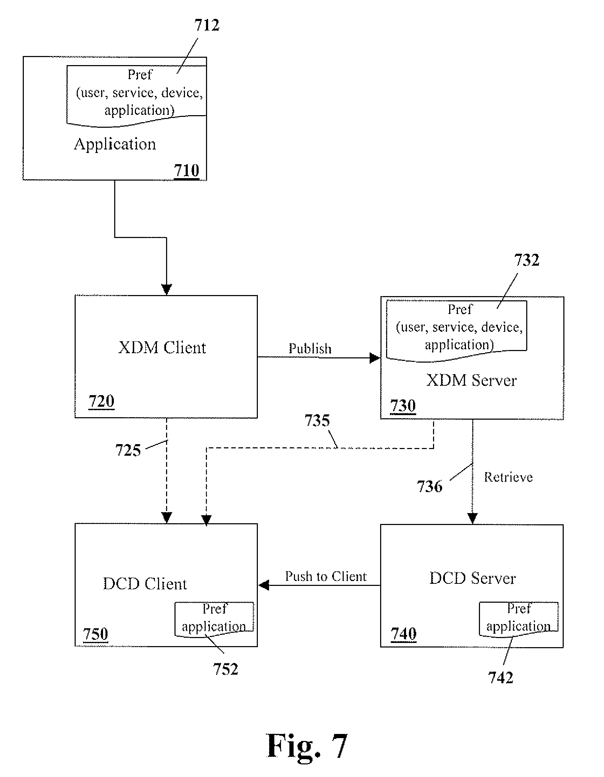

Various architectures could be used to employ the modified XDM structure for the application profile usage. The examples of **Figures 7** to **11** are provided with regard to a DCD architecture. However, as indicated above, other application profiles or preferences could be used.

Reference is now made to **Figure 7. Figure 7** illustrates a block diagram of an exemplary architecture in which an XDM client is on a device.

In the embodiment of **Figure 7****,** an application **710** includes preferences **712.** Preferences **712** could, as would be appreciated by those skilled in the art, include user, service, device or application preferences, among others.

Application **710** communicates with an XDM client **720,** which then publishes the preferences to an XDM server **730.** XDM server stores preferences **732** for use by various applications including a DCD server **740.** As illustrated by arrow **736,** the DCD server **740** can obtain preferences for an application **742** from XDM server by requesting the preferences or by receiving the preferences from XDM server **730.**

DCD server **740** then pushes the preferences to a DCD client **750** and these preferences are stored as preferences **752.**

In alternative embodiments, XDM clients **720** could be adapted to provide a DCD client 750 with the preferences **752** directly. This is illustrated by arrow **725.**

In a further embodiment, XDM server **730** could be adapted to provide a DCD client **750** with the preferences **752** directly. This is illustrated by arrow **735.**

Based on the above, the architecture provides that at installation time or prior to the usage of the application by a user, the application is unaware of the existence of a delivery client, as well as the device execution environment. The application sends the application preferences to the XDM client **720.**

As will further be appreciated, the publication of the preferences by XDM server 730 could utilize any of the models described above with reference to **Figures 4** to **6****.** When the XDM server **730** receives the preferences, the XDM resource is then placed into the document corresponding to a user's Address of Record (AOR).

When an application requests content to be either pushed or pulled, the DCD server **740** initiates a request to the XDM server **730** to match the relevant channels to be delivered to the application via the DCD client **750.** The DCD client **750** has relevant application preferences pushed to it from the DCD server **740.** This relieves the DCD server and possibly the DCD client from having to implement storage locally within the device execution environment. An alternative to the above would have DCD client **750** retrieve application preferences directly from the XDM client **720** or for the DCD client to receive application preferences from the XDM server **730,** as illustrated with reference to **Figure 7****.**

The DCD client **750** may store or cache these preferences locally. The advantage of this deployment model is that the DCD client has flexibility to perform a re-fetch or be notified by the XDM server **730** when underlying metadata is updated by an external source such as a content provider, an authorized user from a desk top pc, among others.

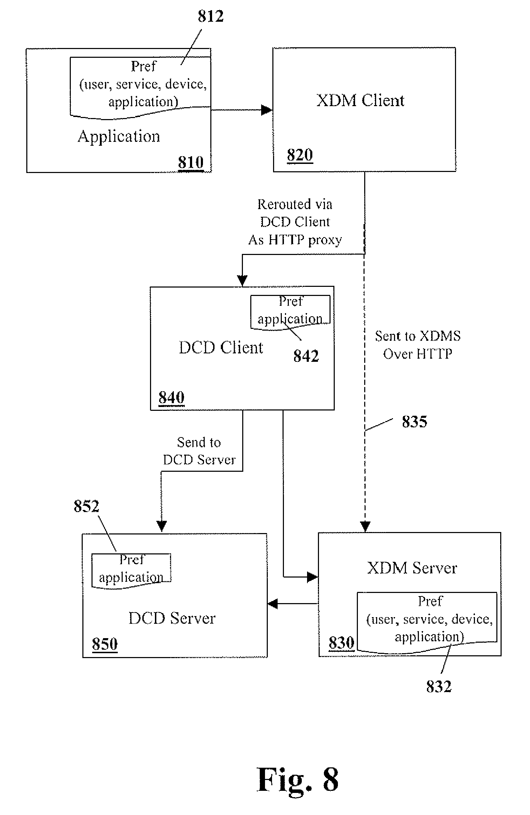

An alternative architecture is illustrated with reference to **Figure 8. Figure 8** illustrates another method where the initial processing steps are similar to those described with reference to **Figure 7****.** The process is identical, application **810** having preferences **812** communicating with an XDM client **820,** until the XDM client **820** publishes the associated preferences. Rather than posting directly to the XDM server **830** as preferences **832,** HTTP publication traffic is re-routed via an HTTP proxy embedded within the DCD client **840** and the DCD client may also choose the application preferences from an HTTP/POST request and store it locally, as shown by **842.** The benefits are immediate, as it avoids a connection to the XDM server over the network. Additionally, the DCD client **840** may pass the preferences to the XDM server **830** indirectly as shown by arrow **835.**

The DCD server **850** can process similarly to the DCD client **840,** storing application preferences **852** only from the set of preferences provided by the application via a DCD client **840.** Finally, the application preferences are delivered to the XDM server **830** for storage. A benefit of this model is that update of the preferences can be immediately known and used by the DCD client. Another benefit of this model is that when preferences are changed, DCD client **840** can transmit these changes or a complete new set or preferences when appropriate and not immediately as the XDM client **820** would do.

In the embodiment of **Figure 8****,** communications from XDM client **820** to XDM server **830** are re-routed through a DCD client **840** as a Hypertext Transfer Protocol (HTTP) proxy.

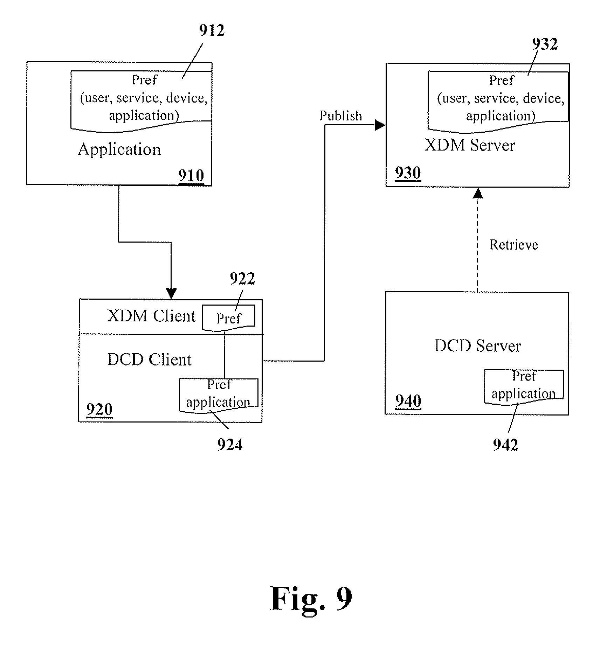

A further alternative model is illustrated with reference to **Figure 9. Figure 9** illustrates a model whereby the application preferences are transmitted to the DCD client. In this model, the XDM client is hosted directly within the DCD client. This model enables the XDM DCD client to locally store preferences before transmitting them to the XDM server. This model also combines the benefits of the DCD storage and delivery capabilities within the XDM generic framework. The DCD client and server proceed the same way as the models described above and in particular the model with reference to **Figure 8****.** As will be appreciated by those skilled in the art, the DCD server is able to retrieve application preferences directly from the XDM server.

Referring to **Figure 9****,** an application **910** includes preferences **912** which are propagated to a combined DCD-XDM client **920.**

The combined DCD-XDM client **920** publishes these preferences to an XDM server **930** that then stores the preferences **932** utilizing a model similar to those of **Figures 4** to **6****.**

DCD server **940** retrieves application preferences **932** from XDM server **930** as preferences **942.**

As illustrated in **Figure 9****,** the DCD-XDM client can store the preferences as **922** and further these preferences could be stored by the DCD client side as preferences **924.**

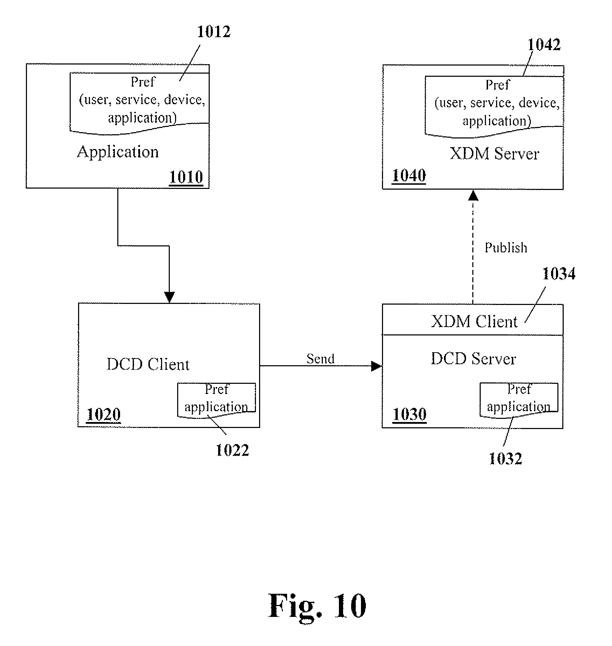

Referring to **Figure 10, Figure 10** illustrates a block diagram of another model in which the application transmits its preferences through a DCD client according to a current DCD model. The DCD client then can choose to store the preferences locally and transmit or send the preferences to the DCD server. In the case of **Figure 10****,** the DCD server contains embedded XDM client functionality. Therefore, the DCD server contacts the XDM server and publishes the preferences. As will be appreciated, the model of **Figure 10** allows a perfect synchronization of the preferences. The DCD server may connect to the XDM server at any time as needed. The DCD client may proceed and function with its current metadata snapshot according to application preferences, even if not connected or the XDM server is not functioning.

Therefore, in **Figure 10****,** an application **1010** includes preferences **1012** and propagates these preferences to DCD client **1020,** which, as indicated above, can locally store these preferences as **1022.**

The DCD client sends the preferences **1022** to DCD server **1030** which may store preferences as **1032.** In the case of **Figure 10****,** DCD server **1030** includes XDM client **1034** functionality and based on this, the preferences are published to XDM server **1040,** which then stores the full set of preferences as **1042** in accordance with the models of **Figures 4** to **6** above.

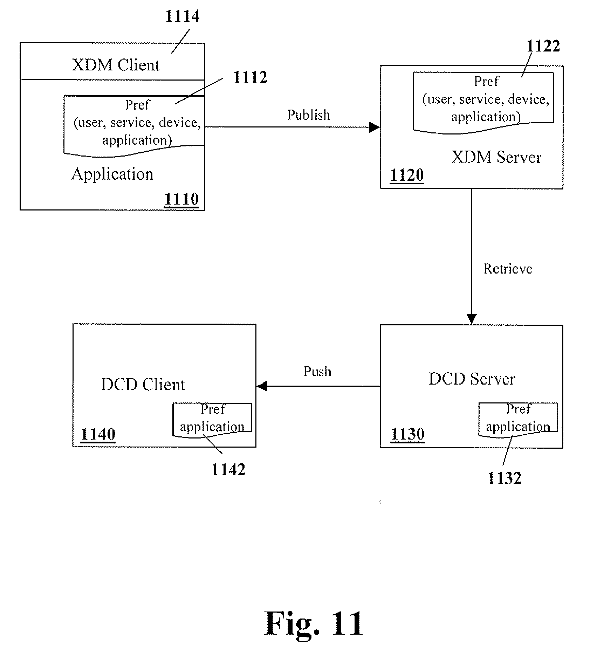

Reference is now made to **Figure 11. Figure 11** describes a model where the application at initialization or installation is authorized to directly contact the XDM server. In the model of **Figure 11****,** the XDM client is embedded within the application itself. While this adds complexity, it permits an application to retrieve its application preferences potentially with no involvement by either the DCD client, proxy or other intermediary.

The DCD server of **Figure 11** and DCD client of **Figure 11** may proceed as illustrated.

Specifically, application **1110** includes preferences **1112.** Further, application **1110** includes an embedded XDM client **1114** and based on this can publish its preferences directly to XDM server **1120** which then stores the preferences as **1122** in accordance with the models of **Figures 4** to **6** above.

A DCD server **1130** may retrieve the preferences from XDM server **1120** and can cache these preferences as storage **1132.**

Further, DCD server **1130** pushes the preferences to DCD client **1140** which then can cache the preferences as **1142.**

The present disclosure therefore deals with generic application preferences and in particular with an indirect method of providing the preferences to the DCD enabler by using an XDM enabler thereby bypassing direct registration of an application with a DCD client.

The present disclosure further provides for a user preference model to provide application preferences to a generic delivery application for an OMA DCD enabler. In particular, the methods and systems consist of, in one embodiment, establishing OMA DCD application usage for XDM consistent with other OMA application usage identifiers.

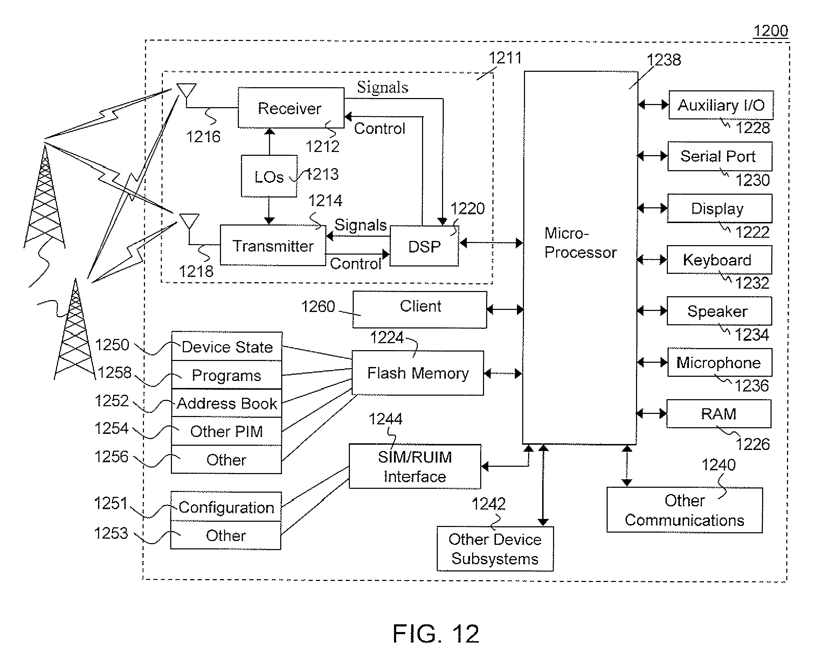

As will be appreciated, the application, DCD client and in some cases the XDM client can reside on any mobile device. One exemplary mobile device is described below with reference to **Figure 12****.** This is not meant to be limiting, but is provided for illustrative purposes.

**Figure 12** is a block diagram illustrating a mobile station apt to be used with preferred embodiments of the apparatus and method of the present application. Mobile station **1200** is preferably a two-way wireless communication device having at least voice and data communication capabilities. Mobile station **1200** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **1200** is enabled for two-way communication, it will incorporate a communication subsystem **1211,** including both a receiver **1212** and a transmitter **1214,** as well as associated components such as one or more, preferably embedded or internal, antenna elements **1216** and **1218,** local oscillators (LOs) **1213,** and a processing module such as a digital signal processor (DSP) **1220.** As will be apparent to those skilled in the field of communications, the particular design of the communication subsystem **1211** will be dependent upon the communication network in which the device is intended to operate.

Network access requirements will also vary depending upon the type of network **1219.** In some CDMA networks network access is associated with a subscriber or user of mobile station **1200.** A CDMA mobile station may require a removable user identity module (RUIM) or a subscriber identity module (SIM) card in order to operate on a CDMA network.. The SIM/RUIM interface **1244** is normally similar to a card-slot into which a SIM/RUIM card can be inserted and ejected like a diskette or PCMCIA card. The SIM/RUIM card can have approximately 64K of memory and hold many key configuration **1251,** and other information **1253** such as identification, and subscriber related information.

When required network registration or activation procedures have been completed, mobile station **1200** may send and receive communication signals over the network **1219.** As illustrated in **Figure 12****,** network **1219** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **1216** through communication network **1219** are input to receiver **1212,** which may perform such common receiver functions as signal amplification, frequency down conversion, filtering, channel selection and the like, and in the example system shown in **Figure 12****,** analog to digital (A/D) conversion. A/D conversion of a received signal allows more complex communication functions such as demodulation and decoding to be performed in the DSP **1220.** In a similar manner, signals to be transmitted are processed, including modulation and encoding for example, by DSP **1220** and input to transmitter **1214** for digital to analog conversion, frequency up conversion, filtering, amplification and transmission over the communication network **1219** via antenna **1218.** DSP **1220** not only processes communication signals, but also provides for receiver and transmitter control. For example, the gains applied to communication signals in receiver **1212** and transmitter **1214** may be adaptively controlled through automatic gain control algorithms implemented in DSP **1220.**

Mobile station **1200** preferably includes a microprocessor **1238** that controls the overall operation of the device. Communication functions, including at least data and voice communications, are performed through communication subsystem **1211.** Microprocessor **1238** also interacts with further device subsystems such as the display **1222,** flash memory **1224,** random access memory (RAM) **1226,** auxiliary input/output (I/O) subsystems **1228,** serial port **1230,** one or more keyboards or keypads **1232,** speaker **1234,** microphone **1236,** other communication subsystem **1240** such as a short-range communications subsystem and any other device subsystems generally designated as **1242.** Serial port **1230** could include a USB port or other port known to those in the art.

Some of the subsystems shown in **Figure 12** perform communication-related functions, whereas other subsystems may provide "resident" or on-device functions. Notably, some subsystems, such as keyboard **1232** and display **1222,** for example, may be used for both communication-related functions, such as entering a text message for transmission over a communication network, and device-resident functions such as a calculator or task list.

Operating system software used by the microprocessor **1238** is preferably stored in a persistent store such as flash memory **1224,** which may instead be a read-only memory (ROM) or similar storage element (not shown). Those skilled in the art will appreciate that the operating system, specific device applications, or parts thereof, may be temporarily loaded into a volatile memory such as RAM **1226.** Received communication signals may also be stored in RAM **1226.**

As shown, flash memory **1224** can be segregated into different areas for both computer programs **1258** and program data storage **1250, 1252, 1254** and **1256.** These different storage types indicate that each program can allocate a portion of flash memory **1224** for their own data storage requirements. Microprocessor **1238,** in addition to its operating system functions, preferably enables execution of software applications on the mobile station. A predetermined set of applications that control basic operations, including at least data and voice communication applications for example, will normally be installed on mobile station **1200** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **1219.** In a preferred embodiment, the PIM data items are seamlessly integrated, synchronized and updated, via the wireless network **1219,** with the mobile station user's corresponding data items stored or associated with a host computer system. Further applications may also be loaded onto the mobile station **1200** through the network **1219,** an auxiliary I/O subsystem **1228,** serial port **1230,** short-range communications subsystem **1240** or any other suitable subsystem **1242,** and installed by a user in the RAM **1226** or preferably a non-volatile store (not shown) for execution by the microprocessor **1238.** Such flexibility in application installation increases the functionality of the device and may provide enhanced on-device functions, communication-related functions, or both. For example, secure communication applications may enable electronic commerce functions and other such financial transactions to be performed using the mobile station **1200.**

In a data communication mode, a received signal such as a text message or web page download will be processed by the communication subsystem **1211** and input to the microprocessor **1238,** which preferably further processes the received signal for output to the display **1222,** or alternatively to an auxiliary I/O device **1228.** A client **1260,** which could be equivalent to DCD clients **120, 750, 840, 920, 1020** and **1140,** or XDM clients **230, 820** or **1114** could in some embodiments be on a mobile device.

A user of mobile station **1200** may also compose data items such as email messages for example, using the keyboard **1232,** which is preferably a complete alphanumeric keyboard or telephone-type keypad, in conjunction with the display **1222** and possibly an auxiliary I/O device **1228.** Such composed items may then be transmitted over a communication network through the communication subsystem **1211.**

For voice communications, overall operation of mobile station **1200** is similar, except that received signals would preferably be output to a speaker **1234** and signals for transmission would be generated by a microphone **1236.** Alternative voice or audio I/O subsystems, such as a voice message recording subsystem, may also be implemented on mobile station **1200.** Although voice or audio signal output is preferably accomplished primarily through the speaker **1234,** display **222** may also be used to provide an indication of the identity of a calling party, the duration of a voice call, or other voice call related information for example.

Serial port **1230** in **Figure 12****,** would normally be implemented in a personal digital assistant (PDA)-type mobile station for which synchronization with a user's desktop computer (not shown) may be desirable, but is an optional device component. Such a port **1230** would enable a user to set preferences through an external device or software application and would extend the capabilities of mobile station 1200 by providing for information or software downloads to mobile station **1200** other than through a wireless communication network. The alternate download path may for example be used to load an encryption key onto the device through a direct and thus reliable and trusted connection to thereby enable secure device communication. As will be appreciated by those skilled in the art, serial port **1230** can further be used to connect the mobile device to a computer to act as a modem.

Other communications subsystems **1240,** such as a short-range communications subsystem, is a further optional component which may provide for communication between mobile station **1200** and different systems or devices, which need not necessarily be similar devices. For example, the subsystem **1240** may include an infrared device and associated circuits and components or a Bluetooth^{™} communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for providing application preferences to mobile services comprising:
publishing, to a extensible markup language 'XML' document management 'XDM' repository preferences associated with relationships between the application and mobile services; and
storing, on an XDM server, the preferences associated with relationships between the application and mobile services.

2. The method of claim 1, wherein the preferences are application preferences for a dynamic content delivery 'DCD' enabler.

3. The method of claim 2, wherein the application preferences are generic or content specific application preferences.

4. The method of claim 2 or claim 3, wherein the preferences for the DCD enabler are stored in an application unique identifier branch of an XDM repository.

5. The method of claim 2 or claim 3, wherein the preferences for the DCD enabler are stored under a branch for a non-DCD service.

6. The method of claim 5, wherein the non-DCD service is a presence service.

7. The method of any one of claims 2 to 6, wherein the publication step comprises:
providing, from an application to an XDM client, preferences;
sending the preferences to an XDM server;
retrieving the preferences from the XDM server to a DCD server; and
pushing the preferences from the XDM server or DCD server to a DCD client.

8. The method of any one of claims 2 to 6, wherein the publication step comprises:
providing, from an application to an XDM client, preferences;
sending the preferences to an XDM server;
utilizing a DCD client as a hypertext transfer protocol proxy between the XDM server and XDM client, thereby retrieving the preferences from at the DCD client; and
sending the preferences from the DCD client to a DCD server or from the XDM server to the DCD server.

9. The method of claim 8, wherein the sending step comprises rerouting to the DCD client.

10. The method of any one of claims 2 to 6, wherein the publication step comprises:
providing, from an application to a combined XDM-DCD client, preferences;
sending the preferences to an XDM server; and
retrieving the preferences from the XDM server to a DCD server.

11. The method of any one of claims 2 to 6, wherein the publication step comprises:
providing, from an application to an DCD client, preferences;
sending the preferences to an XDM aware DCD server; and
forwarding the preferences from the XDM aware DCD server to an XDM server.

12. The method of any one of claims 2 to 6, wherein the publication step comprises:
providing, from an XDM aware application to an XDM server, preferences;
retrieving the preferences from the XDM server to a DCD server; and
pushing the preferences from the DCD server to a DCD client.

13. The method of any preceding claim, wherein the publication allows a first enabler to use a second enabler, said first enabler utilizing a first branch in a XDM repository and said second enabler utilizes a second branch.

14. The method of claim 13, wherein the first branch and the second branch are located in separate XDM repositories.

15. A system for application preference registration to a content delivery system comprising:
an XDM repository on an XDM server adapted to store preferences associated with relationships between mobile services; and
an XDM client adapted to publish preferences associated with relationships between mobile services.

16. The system of claim 15, wherein the preferences are application preferences for a dynamic content delivery 'DCD' enabler, the system further comprising a DCD server and DCD client.

17. The system of claim 16, wherein the application preferences are generic or content specific application preferences.

18. The system of claim 16 or claim 17, wherein the preferences for the DCD server and DCD client are stored in an application usage, user branch of the XDM repository.

19. The system of any one of claims 16 to 18, wherein XDM client is adapted to receive preferences from an application and send the preferences to an XDM server; and
wherein the DCD server is adapted to retrieve the preferences from the XDM server and push the preferences to the DCD client.

20. The system of any one of claims 16 to 18, wherein XDM client is adapted to receive preferences from an application and send the preferences to an XDM server; and
wherein the DCD client is adapted to be utilized as a hypertext transfer protocol proxy between the XDM server and XDM client, thereby retrieving the preferences from at the DCD client, the DCD client or XDM server further adapted to send the preferences to the DCD server.

21. The system of any one of claims 16 to 18, wherein XDM client is combined with the DCD client or DCD server.

22. The system of any one of claims 16 to 18, wherein the XDM client is combined with the application.

23. The system of any preceding claim, further comprising a first enabler adapted to user preferences of a second enabler, said first enabler utilizing a first branch in the XDM repository and said second enabler utilizes the second branch.

24. The system of claim 23, wherein the first branch and the second branch are located in separate XDM repositories.

25. A computer readable medium bearing computer readable instructions which when performed by a processor of a server cause the server to perform the method of any of claims 1 to 14.

## Amended claims

### Amended claims in accordance with Rule 137(2) EPC.

**1.** A method for providing application preferences to a mobile content delivery system comprising:
publishing, to a extensible markup language 'XML' document management 'XDM' repository, preferences associated with relationships between the application and mobile content delivery services;
storing, on an XDM server, the preferences associated with relationships between the application and the mobile delivery services; and
providing the application preferences from the XDM server to the mobile delivery system.

**2.** The method of claim 1, wherein the preferences are application preferences for a dynamic content delivery 'DCD' enabler.

**3.** The method of claim 2, wherein the application preferences are generic or content specific application preferences.

**4.** The method of claim 2 or claim 3, wherein the preferences for the DCD enabler are stored in an application unique identifier branch of an XDM repository.

**5.** The method of claim 2 or claim 3, wherein the preferences for the DCD enabler are stored under a branch for a non-DCD service.

**6.** The method of claim 5, wherein the non-DCD service is a presence service.

**7.** The method of any one of claims 2 to 6, wherein the publication step comprises:
providing, from an application to an XDM client, preferences;
sending the preferences to an XDM server;
retrieving the preferences from the XDM server to a DCD server; and
pushing the preferences from the XDM server or DCD server to a DCD client.

**8.** The method of any one of claims 2 to 6, wherein the publication step comprises:
providing, from an application to an XDM client, preferences;
sending the preferences to an XDM server;
utilizing a DCD client as a hypertext transfer protocol proxy between the XDM server and XDM client, thereby retrieving the preferences from at the DCD client; and
sending the preferences from the DCD client to a DCD server or from the XDM server to the DCD server.

**9.** The method of claim 8, wherein the sending step comprises rerouting to the DCD client.

**10.** The method of any one of claims 2 to 6, wherein the publication step comprises:
providing, from an application to a combined XDM-DCD client, preferences;
sending the preferences to an XDM server; and
retrieving the preferences from the XDM server to a DCD server.

**11.** The method of any one of claims 2 to 6, wherein the publication step comprises:
providing, from an application to an DCD client, preferences;
sending the preferences to an XDM aware DCD server; and
forwarding the preferences from the XDM aware DCD server to an XDM server.

**12.** The method of any one of claims 2 to 6, wherein the publication step comprises:
providing, from an XDM aware application to an XDM server, preferences;
retrieving the preferences from the XDM server to a DCD server; and
pushing the preferences from the DCD server to a DCD client.

**13.** The method of any preceding claim, wherein the publication allows a first enabler to use a second enabler, said first enabler utilizing a first branch in a XDM repository and said second enabler utilizes a second branch.

**14.** The method of claim 13, wherein the first branch and the second branch are located in separate XDM repositories.

**15.** A system for registering application preferences to a mobile content delivery system comprising:
an XDM client adapted to publish preferences associated with relationships between the application and mobile content delivery services; and
an XDM repository on an XDM server adapted to store preferences associated with relationships between the application and the mobile content delivery services provided by the system,
wherein the XDM server is further adapted to provide the preferences to the content delivery system.

**16.** The system of claim 15, wherein the preferences are application preferences for a dynamic content delivery 'DCD' enabler, the system further comprising a DCD server and DCD client.

**17.** The system of claim 16, wherein the application preferences are generic or content specific application preferences.

**18.** The system of claim 16 or claim 17, wherein the preferences for the DCD server and DCD client are stored in an application usage, user branch of the XDM repository.

**19.** The system of any one of claims 16 to 18, wherein XDM client is adapted to receive preferences from an application and send the preferences to an XDM server; and
wherein the DCD server is adapted to retrieve the preferences from the XDM server and push the preferences to the DCD client.

**20.** The system of any one of claims 16 to 18, wherein XDM client is adapted to receive preferences from an application and send the preferences to an XDM server; and
wherein the DCD client is adapted to be utilized as a hypertext transfer protocol proxy between the XDM server and XDM client, thereby retrieving the preferences from at the DCD client, the DCD client or XDM server further adapted to send the preferences to the DCD server.

**21.** The system of any one of claims 16 to 18, wherein XDM client is combined with the DCD client or DCD server.

**22.** The system of any one of claims 16 to 18, wherein the XDM client is combined with the application.

**23.** The system of any preceding claim, further comprising a first enabler adapted to user preferences of a second enabler, said first enabler utilizing a first branch in the XDM repository and said second enabler utilizes the second branch.

**24.** The system of claim 23, wherein the first branch and the second branch are located in separate XDM repositories.

**25.** A computer readable medium bearing computer readable instructions which when performed by a processor of a server cause the server to perform the method of any of claims 1 to 14.
